Europäisches Patentamt

European Patent Office

Office européen des brevets

(11) Publication number: **0 288 862**
**A1**

## EUROPEAN PATENT APPLICATION

(21) Application number: 88106157.6

(22) Date of filing: 18.04.88

(51) Int. Cl.⁴: **A47J 27/21 , B65D 81/34 , A47J 36/02 , A47J 27/088**

(30) Priority: 18.04.87 JP 94292/87

(43) Date of publication of application:
**02.11.88 Bulletin 88/44**

(84) Designated Contracting States:
**AT BE CH DE FR GB IT LI NL SE**

(71) Applicant: **KABUSHIKI KAISHA NAKAMURAYA**
**No. 26-13, Shinjuku 3-chome Shinjuku-ku**
**Tokyo(JP)**

Applicant: **FURUBAYASHI SHIKO KABUSHIKI KAISHA**
**No. 8, Bungo-machi Higashi-ku**
**Osaka-shi Osaka-fu(JP)**

(72) Inventor: **Ishida, Hiromitsu Research& Development Room**
**K.K. Nakamuraya No. 50-9, Sasazuka 1-chome**
**Shibuya-ku Tokyo(JP)**
Inventor: **Uzawa, Manabu Research& Development Room**
**K.K. Nakamuraya No. 50-9, Sasazuka 1-chome**
**Shibuya-ku Tokyo(JP)**
Inventor: **Yamazaki, Makoto Shimookazu Haitsu B-202**
**No. 151 Okazu-cho Totsuka-ku**
**Yokohama-shi Kanagawa-ken(JP)**

(74) Representative: **Betten, Jürgen, Dipl.-Ing. et al**
**Patentanwälte Betten & Resch**
**Reichenbachstrasse 19**
**D-8000 München 5(DE)**

(54) Container with whistling device for thermally cooking food.

(57) A container (1) with a whistling device (3) for thermally cooking food is disclosed, which comprises a container body for containing food to be cooked by heating and a lid (2) for closing the open top of the container body. A whistling device is provided on a portion of the lid for generating a whistling sound when gas passes it quickly. The whistling device is constituted by a space defined between the lid and a closure member provided on and in a spaced-apart relation to the lid, and aligned small through holes formed in the lid and closure member. Toward completion of cooking of the contained food, a whistling sound is generated from the whistling device by quick passage therethrough of steam.

FIG. 1

# CONTAINER WITH WHISTLING DEVICE FOR THERMALLY COOKING FOOD

## BACKGROUND OF THE INVENTION

Field of the Invention:

This invention relates to a food container for thermally cooking contained food in a microwave oven or the like.

Description of the Prior Art:

Food containers of the type noted are usually used for cooking by setting the time predetermined depending on the kind of the contained food in a microwave oven or oven.

Commercially available microwave ovens provide different outputs depending on the manufacture and model, and also some of them have a rotatable table while the others do not. Therefore, the cooking is not always completed in the predetermined time depending on the food. Further, the cooking time varies greatly depending on the quantity of food that is set in the microwave oven. For these reasons, the required cooking time as a criterion is actually indefinite although it is indicated on food-stuffs which are to be cooked in microwave ovens. In practice, the user knows the temperature of the food by touching the container with the hand or eating the food. The cooking time is sometimes insufficient while it is excessive in other cases. In either case, the standard taste of the food can not be obtained.

In some food containers for cooking in microwave ovens, the lid swells in response to a temperature increase, thus indicating the completion of the cooking. In this case, however, the user has to keep watching the lid until it swells. Otherwise, it is liable to take an excessive cooking time to deteriorate the taste of the food.

Further, in electric and gas ovens, inconvenience in cooking due to indefinite cooking time is also experienced.

## SUMMARY OF THE INVENTION

It is an object of the present invention to provide a food container, which may inform of the completion of cooking of the contained food by generating a whistling sound with a very simple construction.

Another object of the present invention is to provide a container with a whistling device for thermally cooking food, which precludes the indefiniteness of the cooking time that has heretofore been the case depending on whether there is a rotatable table or on the quantity of food set in a microwave oven and permits the user to know the completion of cooking by merely hearing a whistling sound, and to cook the food properly.

It is a further object of the present invention to provide a container with a whistling device for thermally cooking food, which is to be used with electric and gas ovens as well as microwave ovens.

According to the present invention, there is provided a container with a whistling device for thermally cooking food, which comprises a container body for containing food to be cooked by heating in microwave oven or the like, and a lid for closing the open top of the container body. A whistling device is provided cn a portion of the lid for generating a sound when gas passes the whistling device quickly. Toward completion of cooking of the contained food, a sound is produced by the whistling device with quick passage therethrough of steam.

The above-mentioned and other objects and features of the invention will become apparent from the following detailed description taken in conjunction with the drawings which indicate embodiments of the invention.

## BRIEF DESCRIPTION OF THE DRAWINGS

Fig. 1 is a sectional view showing an embodiment of the container with a whistling device for thermally cooking food according to the present invention;

Figs. 2 to 4 are schematic side views, to a contracted scale, showing respective modifications of a whistling device in the same embodiment; and

Fig. 5 is a fragmentary plan view showing the example of Fig. 4.

## DETAILED DESCRIPTION OF THE PREFERRED EMBODIMENTS

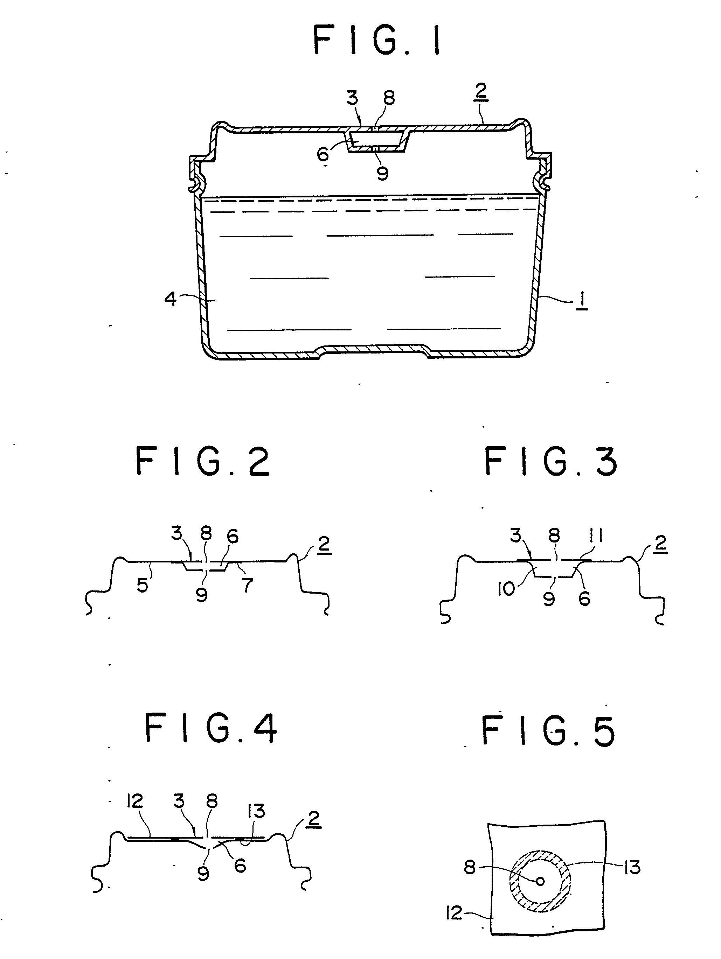

Referring now to Fig. 1, which shows an embodiment of the present invention, a container body is made of a thermoplastic material or made from a coextruded multilayer plastic material thereof. For the purpose of containing long shelf-life foods, it is made of a coextruded multilayer plastic material of polypropyrane/PVDC/polypropyrene or polypropyrene/EVOH/polyethylene with or without a paperboard label bonded to the outer surface. The present invention is not limited to long shelf-life foods, so that the material of the container body is not limited to that noted above so long as it may be used generally for microwave ovens, electric or gas ovens.

The open top of the container body 1 may be closed by a lid 2. The lid 2 is removably fitted on the container body 1, and it is made of a thermoplastic material. In case of a long shelf-life foods, the container is completely sealed by an intermediate lid or seal (not shown). According to the present invention, such an intermediate lid or seal is removed before cooking, then after re-fitting the lid 2, the container is set in a microwave oven or the like.

According to the present invention, a portion of the lid 2 is provided with a whistling device 3, which may produce a whistling sound in response to quick passage of gas. Thus, when steam passes through the whistling device 3 quickly toward the completion of cooking of food 4 contained in the container body 1, a sound is produced. Fig. 2 shows an example of the whistling device 3. In this case, a dish-like molding 7 is bonded to the lower or inner surface of a closure member 5 of the lid 2 such that a space 6 is defined between it and the closure member 5. The closure member 5 and molding 7 are formed with respective small through holes 8 and 9 which are aligned to each other. The dish-like molding 7 may not be bonded to the inner surface of the top of the lid 2, but it may be bonded to the outer surface of the lid top or to the side surface of the lid 2 as well. By so doing, the same effect of the whistling device 3 may be obtained.

The whistling device 3 itself may be modified variously. Some modifications are shown below.

Fig. 3 shows a modification of the whistling device 3. In this instance, the lid 2 is formed with a recessed portion 10, and a closure member 11 is bonded to the lid 2 such as to close the recessed portion 10, thus defining a space 6 between it and the recessed portion 10. The closure member 11 and the bottom portion of the recessed portion 10 are formed with respective small through holes 8 and 9. The recessed portion 10 may be replaced with a raised portion to constitute the whistling device 3. Further, the recessed or raised portion may not be provided on the top of the lid 2, but may be provided on the side thereof as well. Doing so permits substantially the same effects to be obtained.

Fig. 5 shows another modification of the whistling device 3. In this instance, a closure member 12 made of a material having high shrinkage property is used, and its annular bonding portion 13 is bonded to the top of the lid 2, as shown in Fig. 5. As the closure member 12 is thermally caused to shrink, a corresponding portion of the lid 2 is caused to sag downwards, thus forming a space 6 between it and the closure member 12. Again the closure member 12 and corresponding portion of the lid 2 are formed with respective small through holes 8 and 9 aligned to each other to constitute the whistling device 3.

Experiments prove that where the container body 1 and lid 2 constitute a space of 100 to 200 $cm^3$ on contained food, the whistling device 3 suitably has a diameter of about 30mm and a height (or depth) of 4 to 5mm, and the small through holes 8 and 9 suitably have a diameter of 3 to 4mm$\varnothing$. The volume, pitch and tone color of the generated sound may be varied by suitably varying the dimensions noted above.

## Claims

1. A container with a whistling device for thermally cooking food comprising:
   a container body for containing food to be cooked by heating; and
   a lid for closing the open top of said container body, said lid being provided in a portion thereof with a whistling device for generating a whistling sound when gas passes through it quickly;
   whereby a whistling sound is produced at the time of quick passage of steam through said whistling device toward the completion of cooking of the contained food.

2. A container with a whistling device for thermally cooking food according to claim 1, wherein said whistling device is constituted by a space defined between said lid and a closure member provided on and in a spaced-apart relation to said lid, and small through holes bored in said lid and closure member.

3. A container with a whistling device for thermally cooking food according to claim 2, wherein said space is defined by a recessed portion of said lid and a closure member closing said recessed portion.

4. A container with a whistling device for thermally cooking food according to claim 3, wherein said closure member is made of a material having thermal shrinkage property higher than that of said lid and bonded to said lid through an annular bonding portion surrounding said small through holes.

0 288 862

# F I G. 1

# F I G. 2

# F I G. 3

# F I G. 4

# F I G. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-1 943 834 (A.J. MENEGHETTI) <br> * Whole document * <br> --- | 1,2 | A 47 J 27/21 <br> B 65 D 81/34 <br> A 47 J 36/02 <br> A 47 J 27/088 |
| A <br> - | EP-A-0 198 362 (GOURMEC LABORATORY CO., LTD) <br> * Column 5, lines 8-55; column 10, lines 34-43; figures 4(a,b) * <br> --- | 1 | |
| A | EP-A-0 112 295 (GIGATHERM MIKROWELLEN AG) <br> * Whole document * <br> ----- | 1 | |

|  |
|---|
| TECHNICAL FIELDS SEARCHED (Int. Cl.4) |
| A 47 J <br> B 65 D <br> H 05 B |

The present search report has been drawn up for all claims

| Place of search | Date of completion of the search | Examiner |
|---|---|---|
| THE HAGUE | 11-07-1988 | SCHARTZ J. |

EPO FORM 1503 03.82 (P0401)